# EUROPÄISCHE PATENTSCHRIFT

(11) **EP 2 508 752 B1**
(45) Veröffentlichungstag und Bekanntmachung des Hinweises auf die Patenterteilung: **08.06.2016**
(21) Anmeldenummer: 12002404.7
(22) Anmeldetag: 03.04.2012
(51) Int. Cl.: F03D 7/04, F03D 80/00

(54) **Windkraftanlage**
Wind power assembly
Eolienne

(30) Priorität: 04.04.2011 DE 102011015970
(43) Veröffentlichungstag der Anmeldung: 10.10.2012
(73) Patentinhaber: Phoenix Contact GmbH & Co. KG, 32825 Blomberg (DE)
(72) Erfinder: Reitmaier, Marc, 33189 Schlangen (DE)
(74) Vertreter: BSB Intellectual Property Law

(56) Entgegenhaltungen:
- EP-A1- 2 093 026
- WO-A1-2008/086608
- US-A1- 2004 222 901
- US-A1- 2009 004 009
- US-A1- 2010 061 852

## Beschreibung

Die vorliegende Erfindung betrifft eine Windkraftanlage mit einer Gondel und einem Rotor und mit einem Datenübertragungssystem, um insbesondere Betriebs- und Steuerdaten oder sonstige Daten zwischen einer Kontaktstelle an der Gondel und einer relativ dazu rotierenden Kontaktstelle an dem Rotor zu übertragen.

Im Stand der Technik sind verschiedenste Windkraftanlagen bekannt geworden, bei denen die Datenübertragung von einem ersten Datenkontakt an der Gondel zu einem dazu beweglichen und mit der Nabe mitrotierenden zweiten Datenkontakt erfolgt. In der Regel erfolgt die Datenverbindung seriell über Schleifringe, mit denen Daten von der feststehenden Gondel auf die rotierende Nabe und zurück übertragen werden. Solche Schleifringübertrager können mehrere Kontakte aufweisen, sodass gleichzeitig zwei, drei oder mehr elektrisch leitende Verbindungen über den Schleifringübertrager vorhanden sein können. Windkraftanlagen, bei welchen zur Datenübertragung Schleifringe verwendet werden, sind beispielsweise aus der US 2010/061852 A1 und der US 2009/004009 A1 bekannt.

Derartige Schleifringübertrager werden z. B. zur Strom- und Datenübertragung in Windkraftanlagen eingesetzt. Eine Bauform von Windkraftanlagen sind solche mit einer im Wesentlichen horizontalen Rotorachse, so genannte Horizontalachsenwindkraftanlagen. Bei solchen Windkraftanlagen ist auf einem Turm eine Gondel angeordnet, in der unter anderem ein oder mehrere Generatoren, Umrichter, Steuerungsvorrichtungen, Transformatoren und gegebenenfalls Getriebe angeordnet sein können. An der Gondel ist ein so genannter Rotor, der eine Nabe mit daran angebrachten Rotorblättern umfasst, um eine i. W. horizontale Achse drehbar gelagert. Der Rotor treibt den oder die Generatoren an, gegebenenfalls unter Vermittlung eines Getriebes. Zur Einstellung des Anstellwinkels der Rotorblätter zum Wind ist jedes der Rotorblätter um seine Längsachse drehbar an der Nabe angebracht.

Bei bestehenden Windkraftanlagen richtet sich die Drehzahl des Rotors in einem ersten Betriebsbereich in der Regel nach der Windgeschwindigkeit, mit der die Rotorblätter angeströmt werden. Je höher die Windgeschwindigkeit, desto höher ist die Drehzahl. In einem zweiten Betriebsbereich, der mit Erreichen der Nennleistung der Windkraftanlage beginnt, wird die Drehzahl bis zur einer vorgegebenen Windgeschwindigkeit konstant gehalten, um die Windkraftanlage vor Überlastung zu schützen.

Dazu ist es bekannt, den Anstellwinkel der Rotorblätter geeignet zu verändern und damit die Drehzahl der Windkraftanlage entsprechend zu begrenzen.

Zur Verstellung des Anstellwinkels eines Rotorblattes können in dem Rotor z. B. elektromotorische Antriebe integriert sein, die über Frequenzumrichter gesteuert werden. Der jeweils aktuelle Anstellwinkel der Rotorblätter wird oftmals über einen Absolut-Drehwinkelgeber erfasst, der an dem Rotorblatt vorgesehen ist. Des Weiteren sind im zunehmenden Maße in den Rotorblättern Sensoren vorgesehen, die nicht nur den Anstellwinkel der Rotorblätter, sondern die beispielsweise auch den Abstand der Rotorblätter zu dem Turm oder eine Durchbiegung der Rotorblätter erfassen, oder die die Frequenz und Stärke von Vibrationen in dem Rotorblatt detektieren.

Der Einsatz von Frequenzumrichtern und von Sensoren in den Rotorblättern erfordert die Datenübertragung von der Nabe, also einem drehenden Teil der Windkraftanlage, zu einem feststehenden Teil der Windkraftanlage, üblicher Weise nämlich der Gondel. Dort oder auch im Turm befindet sich in der Regel die Steuerung der Windkraftanlage. Für einen sicheren Betrieb einer Windkraftanlage ist es unerlässlich, dass die Steuerung unter allen Betriebsbedingungen sicher und zuverlässig arbeitet.

Viele Windkraftanlagen werden ab einer bestimmten maximal zulässigen Windgeschwindigkeit, der so genannten Abschalt-Windgeschwindigkeit, abgeschaltet, um eine Überlastung zu vermeiden. Dazu werden die Rotorblätter in die so genannte Fahnenstellung gedreht. Die Windkraftanlage fährt selbsttätig wieder an, wenn die durchschnittliche Windgeschwindigkeit sich über einen bestimmten Zeitraum unterhalb einer vorgegebenen Schwelle befindet. Dadurch wird eine Überlast der Windkraftanlage zuverlässig vermieden. Nachteilig ist jedoch, dass in den Phasen des stärksten Windes, wo die größte Strommenge produziert werden könnte, die Windkraftanlage außer Betrieb gesetzt wird, um Schäden zu vermeiden. Der Betrieb startet nämlich erst dann wieder, wenn die Windgeschwindigkeit über einen längeren Zeitraum unterhalb der maximal zulässigen liegt. In jedem Fall ist aber eine zuverlässige und sichere Datenübertragung zwischen Gondel und Rotor erforderlich, damit die Steuerung den Betrieb in optimaler Weise steuern kann und die Anlage bei zu starkem Wind oder Störungen zuverlässig abschaltet.

Bislang werden Daten und Strom über Schleifringe von der Gondel zu dem Rotor übertragen. Bei der bisher verwendeten Datenübertragung ist nur eine geringe Datenrate möglich, die auch nicht langfristig immer zuverlässig funktioniert. In der Regel müssen die Schleifringe im Jahresrhythmus oder spätestens nach zwei Jahren Betrieb gereinigt werden, um die Datenübertragung weiterhin zu erlauben. Die Datenübertragung findet dabei über Bussysteme wie Interbus, CAN oder dgl. statt, wobei eine serielle Datenübertragung erfolgt.
Fällt nur ein einziger Schleifkontakt aus, muss die gesamte Anlage abgeschaltet werden, weil die zuverlässige Datenübertragung nicht mehr sichergestellt ist.

Die Datenübertragung über ein Ethernet-Kabel hingegen - die schnell genug wäre - funktioniert in der Regel nur im Stillstand, da Ethernet-Kabel als Twisted-Pair-Kabel jeweils zwei miteinander verdrillte Adern aufweisen müssen, um Störeinflüsse aus der Umwelt zu eliminieren. Bei der Übertragung über einen Schleifring hingegen kann selbstverständlich innerhalb des Schleifrings keine Verdrillung der einzelnen Kontakte ermöglicht werden, sodass an dem Schleifring Störungen im erheblichen Ausmaße auftreten können, die sich auf die Zuverlässigkeit der Datenübertragung massiv auswirken. Im Drehbetrieb ist eine Übertragung nicht oder nur unzuverlässig möglich.

Eine serielle Datenübertragung ermöglicht hingegen aber nur eine geringe Bandbreite der übertragenen Datensignale, die bei zunehmendem Einsatz von Sensoren in den Rotorblättern nicht ausreicht. Sollen zusätzliche Sensoren eingesetzt werden, die beispielsweise in Form einer Glasfaser sich um das vollständige Rotorblatt erstrecken und mit denen die optische Dämpfung gemessen werden kann, die von den Vibrationen des Rotorblattes abhängt, so wird eine größere Bandbreite der Datenübertragung innerhalb der Windkraftanlage erforderlich.

Grundsätzlich ist es zwar möglich, die Daten per Funk von den Rotorblättern zu der Steuerung zu übertragen. W-LAN-Systeme weisen heutzutage die erforderliche Bandbreite auf und können grundsätzlich über die geringe erforderliche Distanz die gewünschten Daten sehr zuverlässig übertragen. Nachteilig ist allerdings die begrenzte Anzahl der zur Verfügung stehenden Kanäle.

Betreiber von beispielsweise Windkraftanlagen wollen oftmals Werbung für ihre Systeme machen oder einen zusätzlichen Nutzen aus der installierten Anlage ziehen, in dem sie beispielsweise nachträglich Webcams in der Windkraftanlage installieren, die Bilder oder ein Videostream von der Umgebung anfertigen. Zur Datenübertragung zu den Webcams oder zu den Temperatur- und Wettersensoren werden oftmals W-LAN-Systeme oder aber generell Funksysteme verwendet, die im gleichen Frequenzband funken. Durch den Einsatz solcher nachträglich vom Betreiber installierten W-LAN-Systeme oder sonstiger Funksysteme kann die Funkübertragung von dem Rotorblättern zur Steuerung zeitweilig oder dauerhaft empfindlich gestört werden. Wird der gleiche Funkkanal gewählt und treten ungünstige Umstände zusammen, können solche Störungen auftreten, dass eine zuverlässige Datenübertragung zwischen der zentralen Steuerung der Windkraftanlage und der Nabe bzw. dem Rotor nicht mehr gewährleistet werden kann.

Sollte aber über einen gewissen Zeitraum keine Datenverbindung zwischen der Steuerung und dem Rotor bestehen, wird die Windkraftanlage aus Sicherheitsgründen abgeschaltet. Fällt eine solche Funk- bzw. Drahtlosverbindung aus, kann dies deshalb einen bedeutenden wirtschaftlichen Schaden für den Betreiber zur Folge haben, da die Windkraftanlage unnötig in den Stillstand geht, nur weil die Datenübertragung nicht zuverlässig genug funktioniert. Auch bei anderen Drahtlossystemen kann ein zuverlässiger Betrieb nicht immer sicher gewährleistet werden. Bluetooth ermöglicht zwar über ein Frequenzhopping-Verfahren grundsätzlich eine ungestörtere Signalübertragung, aber auch hier ist eine Störung oder ein Ausfall möglich. Außerdem reicht die übertragbare Datenrate nicht aus.

Obwohl aufgrund der kurzen zu überbrückenden Entfernung eine Funkverbindung geeignet erscheint, kann aufgrund unvorhergesehener Installationen von Webcams und dergleichen durch den Betreiber oder Besitzer ein ungestörter Datenaustausch über Funk nicht immer sicher gewährleistet werden. Auch kurzzeitige Störungen bei der Datenübertragung über Funk können zu erheblichen wirtschaftlichen Schäden führen, wenn sich die Windkraftanlage abschaltet. Die Suche nach der Problemursache kann sich bei Funkstörungen auch als schwierig gestalten.

Es ist deshalb die Aufgabe der Erfindung, eine Windkraft-anlage mit einem Datenübertragungssystem zur Verfügung zu stellen, womit zwischen der Gondel und dem Rotor eine hohe Signalübertragungsrate dauerhaft zuverlässig ermöglicht wird.

Diese Aufgabe wird gelöst durch eine Windkraftanlage mit den Merkmalen des Anspruchs 1. Bevorzugte Weiterbildungen der Erfindung sind Gegenstand der Unteransprüche.

Weitere Vorteile und Merkmale der vorliegenden Erfindung ergeben sich aus der allgemeinen Beschreibung und der Beschreibung des Ausführungsbeispiels.

Eine erfindungsgemäße Windkraftanlage weist eine Gondel und einen Rotor und wenigstens ein Datenübertragungssystem auf. Das Datenübertragungssystem ist zur Datenübertragung von einer ersten Datenkontakteinrichtung in der Gondel über wenigstens einen Datenübertrager zu einer relativ zu der ersten Datenkontakteinrichtung rotierbaren zweiten Datenkontakteinrichtung in dem Rotor geeignet und vorgesehen. Dabei ist die erste Datenkontakteinrichtung in der Gondel mit einem ersten DSL-Modem verbunden, welches über den wenigstens einen Datenübertrager mit einem zweiten DSL-Modem verbunden ist. Das zweite DSL-Modem ist mit der zweiten Datenkontakteinrichtung in dem Rotor verbunden. Zwischen dem ersten und dem zweiten DSL-Modem ist der Datenübertrager angeordnet.

Das erfindungsgemäße Datenübertragungssystem hat viele Vorteile. Ein erheblicher Vorteil des erfindungsgemäßen Datenübertragungssystems besteht darin, dass die Datenverbindung über den Datenübertrager über zwei DSL-Modems realisiert wird. DSL-Modems (Digital Subscriber Line-Modems) ermöglichen eine zuverlässige Datenübertragung beispielsweise über das Telefonnetz über vergleichsweise große Entfernungen im Bereich von bis zu mehreren Kilometern. Das Telefonnetz besteht in der Regel aus zwei Kupferdrähten, die beispielsweise nicht miteinander verdrillt werden müssen, um Störungen zu vermeiden. Deshalb eignet sich eine DSL-Verbindung auch gut für den Einsatz an Komponenten, die gegeneinander bewegbar und insbesondere gegeneinander rotierbar angeordnet sind.

Beispielsweise ist es möglich, dass der Datenübertrager als Schleifring ausgeführt ist. Eine Datenübertragung, die über ein DSL-Modem moduliert über einen solchen Schleifring erfolgt, ist zuverlässig. Eine geschirmte Verbindung ist bei der Übertragung mittels DSL-Modems nicht erforderlich, da verdrillte Kabel nicht eingesetzt werden müssen. Während die für relativ kurze Distanzen vorgesehene Funkübertragung nur eine geringe Zuverlässigkeit erbracht hat, kann über die für vergleichsweise viel größere Entfernungen vorgesehene DSL-Übertragung eine Datenübertragung über Schleifringe zwischen der Gondel und dem Rotor bzw. insbesondere der Nabe mit hoher Datenrate gewährleistet werden.

Die zweite Datenkontakteinrichtung ist relativ zu der ersten Datenkontakteinrichtung rotierbar vorgesehen und ist in dem rotierenden Teil der Windkraftanlage angeordnet. Vorzugsweise weist der Datenübertrager einen Schleifring auf, der wenigstens einen Schleifkontakt und insbesondere wenigstens zwei Schleifkontakte umfasst. Durch die Datenübertragung über DSL können die Daten mit hoher Datenrate sicher übertragen werden. Kleine und kleinste Störungen bei der Datenübertragung werden durch die automatische Signalverarbeitung zuverlässig erkannt und behoben. Deshalb kann auch mit nur einer Datenverbindung über zwei Schleifkontakte eine erheblich zuverlässigere Datenübertragung über das DSL-Modem erfolgen als die serielle Datenübertragung über Schleifringe im Stand der Technik. Deshalb kann der Schleifring länger betrieben werden, bevor er gewartet wird.

In besonders bevorzugten Ausgestaltungen sind wenigstens vier Schleifkontakte vorgesehen. Möglich ist auch der Einsatz von mehr als vier Schleifkontakten. Die Schleifkontakte können an einem einzelnen Schleifring oder an mehreren Schleifringen vorgesehen sein.

Besonders bevorzugt ist der Einsatz von vier oder mehr Schleifkontakten, da bei vier Schleifkontakten zwei parallele Datenverbindungen ermöglicht werden. Die erste Datenverbindung erfolgt über zwei Schleifkontakte und eine zweite Datenverbindung über zwei weitere Schleifkontakte. Dadurch kann eine redundante Auslegung des Systems erfolgen. Solange alle vier Schleifkontakte zuverlässig zur Datenübertragung zur Verfügung stehen, kann eine Verdoppelung der Datenrate vorgesehen sein, während bei dem Ausfall eines einzelnen Schleifkontakts immer noch eine Datenverbindung besteht, die ausreichende Datenmengen übertragen kann.

Selbstverständlich ist es bei Einsatz von sechs Schleifkontakten auch möglich, drei separate Datenverbindungen zur Verfügung zu stellen, sodass die Datenübertragung auch bei Ausfall von zwei oder sogar bis zu vier Schleifkontakten noch möglich sein kann. Durch den redundanten Einsatz kann die schon an sich größere Betriebssicherheit noch weiter erhöht werden. Die Wartung der Schleifkontakte kann vorgenommen werden, wenn sowieso eine Wartung ansteht.

Vorzugsweise wird in dem Datenübertragungssystem ein Alarm ausgelöst, wenn ein Schleifkontakt nicht mehr zuverlässig Daten überträgt. Dieses Signal kann dem Betreiber zur Verfügung gestellt werden, sodass der Betreiber im Rahmen der nächsten vorgesehenen Wartung für eine Reinigung des Schleifkontaktes und vorzugsweise aller Schleifkontakte sorgen kann. Solange die Datenübertragung über wenigstens eine Datenverbindung noch zuverlässig funktioniert, muss die Anlage nicht abgeschaltet werden. Dadurch kann eine höhere Betriebsstundenzahl pro Jahr erreicht werden, was die Auslastung verbessert und somit das Ergebnis erhöht.

Vorzugsweise ist das Datenübertragungssystem dazu geeignet, eine Vielzahl von Sensoren in einem Rotorblatt oder in allen Rotorblättern einer Windkraftanlage datentechnisch zu versorgen.

Typische Windkraftanlagen können heutzutage Nabenhöhen von 140 m oder sogar mehr erreichen. Dabei erreicht die Länge eines Rotorblattes beispielsweise 60 m und das Gewicht eines Rotorblattes kann 20 t oder mehr erreichen. Die Investitions- und insbesondere auch die Montagekosten jeden einzelnen Rotorblattes einer Windkraftanlage sind deshalb sehr hoch. Im Betrieb können solchen Rotorblätter durch Umwelteinflüsse beschädigt werden. Beispielsweise können Blitze in ein Rotorblatt einschlagen und das Rotorblatt lokal oder sogar großflächiger beschädigen. Möglich ist auch eine Beschädigung durch Vogelschlag. Die Kosten für ein neues Rotorblatt sind enorm. Deshalb versuchen Betreiber von Windkraftanlagen, beschädigte Rotorblätter zu reparieren und nicht direkt auszutauschen. Um vorab das Ausmaß und die Art und den Ort der Schäden zu erfassen, können nun mit der Erfindung zunehmend Sensoren in Rotorblätter und den Rotor integriert werden, wodurch eine hochsensitive Erfassung des Zustandes jedes einzelnen Rotorblattes ermöglicht wird. Durch die Sensordaten kann eine Reparatur viel einfacher erfolgen, da die Schäden zuvor weitestgehend bekannt sind.

Vorzugsweise ist wenigstens eines der DSL-Modems als ADSL-Modem (Asymmetrisches DSL) ausgeführt. Bei asymmetrischem DSL ist die Datenübertragungsgeschwindigkeit in eine Richtung größer als in die andere. Deshalb werden hier vorzugsweise SDSL-Modems (Synchrones DSL) eingesetzt, bei denen die Datenübertragungsrate in beiden Richtungen gleich ist. In vielen Fällen ist aber auch der Einsatz von ADSL bevorzugt.

Besonders bevorzugt werden SHDSL-Modems (Single-Pair-High-Speed-Digital Subscriber Line-Modems) verwendet, die beispielsweise unter der G.SHDSL-Norm normiert sind.

Die Datenübertragung erfolgt insbesondere in einem Frequenzbereich unter 10 MHz und insbesondere unterhalb 2 MHz. Besonders bevorzugt erfolgt die Datenübertragung mit Frequenzen zwischen 50 kHz - 1500 kHz und insbesondere in einem Bereich zwischen 100 kHz und 1000 kHz.

Die erfindungsgemäße Windkraftanlage umfasst vorzugsweise wenigstens eine Tragkonstruktion und wenigstens ein drehbar daran vorgesehenes Rotorblatt. Wenigstens ein Sensor kann an wenigstens einem Rotorblatt vorgesehen, um es zu ermöglichen, den Betrieb in Abhängigkeit von den Umgebungsbedingungen und/oder dem Zustand des Rotorblattes zu steuern. Es kann wenigstens eine Steuereinrichtung insbesondere an der Tragkonstruktion vorgesehen sein, welche über wenigstens eine Datenverbindung mit dem wenigstens einen Sensor in dem Rotorblatt in Datenverbindung steht. Die Datenverbindung erfolgt über eine erste Datenkontakteinrichtung mit einem ersten DSL-Modem zu einem Datenübertrager, welcher über ein zweites DSL-Modem mit einer zweiten Datenkontakteinrichtung verbunden ist. Die zweite Datenkontakteinrichtung ist direkt oder indirekt mit dem Sensor verbunden.

Bei der Windkraftanlage kann eine zuverlässige Datenübertragung von dem drehenden Teil der Windkraftanlage auf den feststehenden Teil mit hoher Datenrate gewährleistet werden. Dabei kann eine Datenübertragung mit hohen Datenübertragungsraten ermöglicht werden, ohne dass auf eine gegebenenfalls unzuverlässige Funkverbindung zurückgegriffen wird. Die Datenverbindung erlaubt die Übertragung von Steuerungs-, Mess- und Betriebsdaten und auch von sonstigen Daten zwischen der Nabe und der Gondel.

An der Gondel der Windkraftanlage ist ein Rotor vorgesehen, der eine Nabe mit daran angebrachten Rotorblättern umfasst. Der Rotor ist gegenüber der Gondel drehbar.

Die insbesondere als Turm ausgeführte Tragkonstruktion dient vorzugsweise auch zur Aufnahme von Teilen der Steuereinrichtung, um den Betrieb zu steuern. In wenigstens einem Rotorblatt ist wenigstens ein Aktor oder wenigstens eine Verstelleinrichtung zur Verstellung des Rotorblatts vorgesehen.

Weitere Vorteile und Merkmale der vorliegenden Erfindung ergeben sich aus dem Ausführungsbeispiel, welches im folgenden mit Bezug auf die beiliegenden Figuren erläutert wird.

In den Figuren zeigen:
- Fig. 1: eine schematische Darstellung einer Windkraftanlage; und
- Fig. 2: eine schematische Darstellung des Datenübertragungssystems der Windkraftanlage nach Fig. 1.

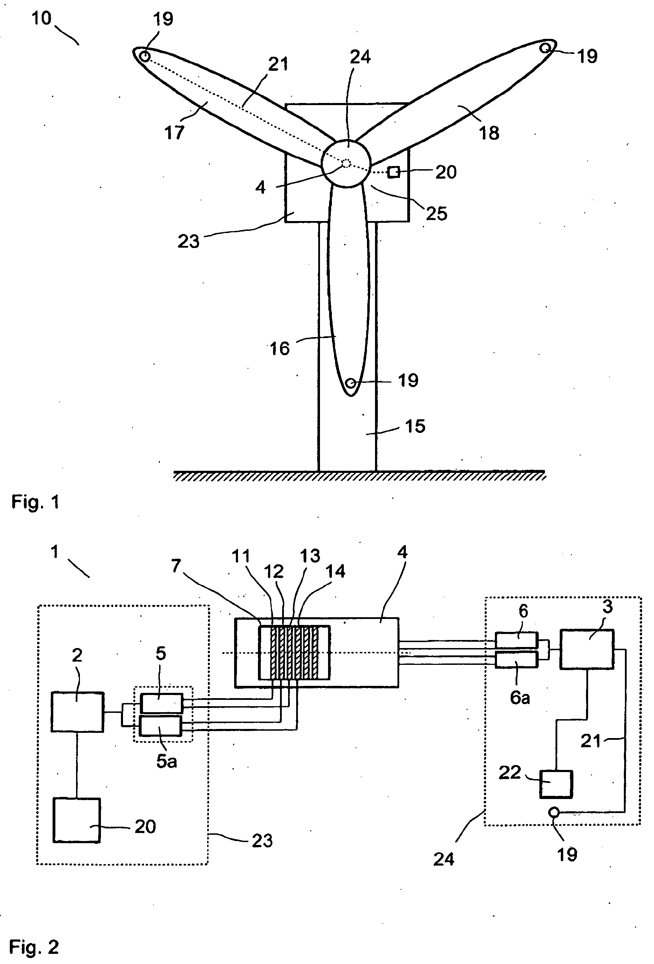

In den Figuren 1 und 2 ist ein Ausführungsbeispiel der Erfindung dargestellt, wobei in Figur 1 in schematischer Art und Weise eine Windkraftanlage 10 abgebildet ist, die hier über einen Turm 15, eine Gondel 23, eine Nabe 24 und drei Rotorblätter 16, 17 und 18 verfügt, die symmetrisch über dem Umfang angeordnet sind und die drehbar gegenüber dem Turm 15 gelagert sind. Der Rotor 25 umfasst die Nabe 24 und die Rotorblätter 16, 17 und 18. Der Rotor ist mit den Rotorblättern 16, 17 und 18 um eine im Wesentlichen horizontale Achse drehbar. Um die Windkraftanlage 10 nach der Windrichtung auszurichten, ist die Gondel 23 um eine etwa vertikale Achse verschwenkbar vorgesehen. Die Ausrichtung der Windkraftanlage 10 in Windrichtung hinein erfolgt vorzugsweise motorisch gesteuert.

Der Anstellwinkel der Rotorblätter 16, 17 und 18 ist veränderbar, um die Drehgeschwindigkeit der Rotorblätter an die Windverhältnisse anzupassen. Beim Erreichen einer maximal vorgesehenen Drehgeschwindigkeit oder beim Erreichen einer bestimmten Grenzdrehzahl wird der Anstellwinkel der Rotorblätter in Schritten oder kontinuierlich verändert, so dass die vorgesehene maximal zulässige Betriebsdrehzahl zuverlässig nicht überschritten wird. Gegebenfalls muss die Anlage abgeschaltet werden, wenn die Windstärke zu groß wird.

Zur Einstellung des Anstellwinkels ist in jedem Rotorblatt 16, 17 und 18 jeweils wenigstens ein Aktor 22 vorgesehen, der schematisch nur in der Figur 2 eingezeichnet ist.

In den Rotorblättern 16, 17 und 18 ist jeweils wenigstens ein Sensor 19 vorgesehen. Vorzugsweise sind dort eine Vielzahl von Sensoren angeordnet, die nicht nur den Anstellwinkel der Rotorblätter 16-18 erfassen, sondern die auch eine Vielzahl weiterer Betriebszustände der einzelnen Rotorblätter 16-18 überwachen und erfassen. Dazu gehört beispielsweise die Art und Stärke der Vibration der einzelnen Rotorblätter 16-18. Möglich ist es auch, nicht nur die gesamte Vibration der einzelnen Rotorblätter zu erfassen, sondern lokale Schwingungen auf der Oberfläche der Rotorblätter 16-18 zu detektieren, um lokale Defekte frühzeitig zu erkennen, so dass eine einfache Reparatur und Wartung der Rotorblätter ermöglicht wird, ohne den Austausch eines gesamten Rotorblattes erforderlich zu machen.

Möglich und bevorzugt ist auch die Überwachung des axialen Abstandes der Rotorblätter zu dem Turm 15, um eine Kollision zuverlässig zu vermeiden.

Um alle erforderlichen Daten zwischen der zentralen Steuereinrichtung 20 und den lokal vorgesehenen Sensoren 19 sowie den zugehörigen Aktoren 22 zu gewährleisten, ist ein Datenübertragungssystem 1 vorgesehen, welches mit hoher Zuverlässigkeit eine Datenübertragung von bis zu 5 MBit pro Sekunde und insbesondere bis zu 15 MBit pro Sekunde oder mehr über 2 Adern ermöglicht. Dazu weist das Datenübertragungssystem 1 eine erste Datenkontakteinrichtung 2 in der Gondel 23 auf, die mit einem ersten DSL-Modem 5 verbunden ist.

Das DSL-Modem ist hier als SHDSL-Modem ausgeführt, welches über 2 Adern die Datenübertragung mit bis zu 15 MBit pro Sekunde erlaubt. Die zwei Adern des ersten DSL-Modems 5 sind mit einem Schleifring 7 und dort mit den Schleifkontakten 11 und 13 verbunden.

Zur zusätzlichen Datenübertragung und zur Redundanz ist ein weiteres "erstes" DSL-Modem 5a vorgesehen, welches mit den Schleifkontakten 12 und 14 des Schleifrings 7 verbunden ist.

Die Schleifkontakte 11-14 sind 1:1 mit entsprechenden Leitern verbunden, wobei die Schleifkontakte 11 und 13 mit einem zweiten DSL-Modem 6 in Kontakt stehen, welches mit der zweiten Datenkontakteinrichtung 3 verbunden ist. Alternativ steht ein weiteres "zweites" DSL-Modem 6a zur Verfügung, welches mit den Schleifkontakten 12 und 14 des Schleifrings 7 verbunden ist.

Die ersten DSL-Modems 5 und 5a und die zweiten DSL-Modems 6 und 6a stellen insgesamt zwei Datenverbindungen 8 und 9 zur Verfügung, die im Normalbetrieb entweder redundant arbeiten oder aber zu einer Verdoppelung der möglichen Bandbreite führen.

Die ersten Modems 5 und 5a können in einem Gehäuse oder sogar zu einer Baueinheit zusammengefasst sein. Die in Fig. 2 um die Modems 5 und 5a gestrichelt eingezeichnete Linie zeigt dies anschaulich. Ebenso können die zweiten Modems 6 und 6a zu einer gemeinsamen Baugruppe integriert sein.

Sollte einer der Schleifkontakte 11 bis 14, z. B. Schleifkontakt 11, keinen zuverlässigen Kontakt mehr zu dem Schleifring 7 aufweisen, so fällt eine Datenverbindung 8 oder 9 aus. Selbst dann ist die Datenübertragung über die jeweils andere Datenverbindung 9, 8 aber noch zuverlässig möglich, so dass ein weiterer Betrieb der Windkraftanlage 10 gewährleistet werden kann. Wenn ein zweiter Schleifkontakt ausfällt, ist es möglich, dass noch eine Datenverbindung 8 oder 9 vollständig erhalten bleibt, wenn dies in diesem Beispiel Schleifkontakt 13 ist. So ist ggf. auch bei Ausfall von zwei Schleifkontakten 11 und 13 oder 12 und 14 auch weiterhin ein zuverlässiger Betrieb der Windkraftanlage möglich.

In allen Fällen wir bei der Detektion des Ausfalls eines Schleifkontakts 11-14 ein Alarmsignal ausgegeben, welches dem Betreiber signalisiert, dass eine Wartung der Anlage und insbesondere der Schleifkontakte sobald als möglich vorgenommen werden sollte. Beispielsweise kann bei einem planmäßigen Stopp der Anlage 10 dann der entsprechende Schleifkontakt gereinigt oder ausgetauscht werden. Dadurch wird die Betriebssicherheit und Verfügbarkeit der Anlage 10 erheblich erhöht.

Bei einer konventionellen - im Stand der Technik - bekannten Signalübertragung, die seriell über die Schleifkontakte erfolgt, führt der Ausfall auch eines einzelnen Schleifkontakts hingegen zum Ausfalls ggf. der gesamten Anlage.

Durch das erfindungsgemäße Datenübertragungssystem 1, welches die Datenübertragung über DSL-Modems 5; 6 und einen Schleifring 7 zur Verfügung stellt, wird eine erheblich höhere Ausfallsicherheit erzielt. Dadurch, dass die Datenübertragung in einem großen Frequenzbereich zwischen etwa 100 KHz und 1000 KHz erfolgt, erfolgt die Übermittlung nicht nur in einem schmalen Frequenzband, sondern in einem breiten Frequenzband, wodurch die Signalstärke verringert werden kann, was die Ausfallsicherheit weiterhin erhöht.

Da praktisch eine kapazitive Datenübertragung erfolgt, ist es sogar denkbar, dass bei zunehmendem Kontaktwiderstand noch eine zuverlässige Datenübertragung erfolgt.

Die erste Datenkontakteinrichtung 2 in der Gondel 23 und die zweite Datenkontakteinrichtung 3 in der Nabe 24 können jeweils mit herkömmlichen Ethernet-Kabeln verbunden werden, sodass im Weiteren in der Anlage konventionelle Komponenten eingesetzt werden können.

Mit der Erfindung wird es ermöglicht, Condition-Monitoring Systeme in den Rotorblättern einzusetzen, die den Betrieb engmaschig überwachen. Messsysteme und Enteisungssysteme, die für eine zuverlässige Enteisung der Rotorblätter sorgen, können eingesetzt und zielgenau gesteuert werden. Möglich ist der Einsatz beispielsweise einer Webcam, die im Rotorblatt aufgenommen ist und die zur weiteren Überwachung des Betriebs sorgt oder die beispielsweise zur Informations- oder Werbezwecken im Internet Bilder zur Verfügung stellt, um aus den drehenden Rotorblättern heraus Bilder zu liefern.

Möglich ist auch die Drehzahl-Regelung der gesamten Anlage aufgrund der in den Rotorblättern vorhandenen Sensoren.

Bevorzugt ist auch die Steuerung der Anlage 10 anhand der gewonnenen Sensordaten. Möglich ist es beispielsweise, dass die vorgesehene Betriebsdrehzahl in Abhängigkeit von den Sensordaten der einzelnen Rotorblätter 16 bis 18 angepasst wird. Sollen beispielsweise aufgrund von Vogelschlag oder dergleichen kleinere Schäden an einem der Rotorblätter 16 bis 18 auftreten, kann die zulässige Betriebsdrehzahl abgesenkt werden, um weitere Schäden an der Anlage 10 zu vermeiden, während gleichzeitig noch Strom produziert werden kann, bis die Reparatur erfolgt. Muss ein Rotorblatt ausgetauscht werden, ist regelmäßig mit langen Wartezeiten zu rechnen, da die dafür vorgesehenen und erforderlichen Kranwagen meist über relativ lange Zeiträume ausgebucht sind. Sollten die aufgetretenen Schäden aber noch einen Betrieb mit verminderter Leistung ermöglichen, könnte dies individuell sensorgesteuert erfolgen, sodass die Verfügbarkeit und die Stromproduktion maximiert wird.

Die einzelnen Sensoren 19 in den Rotorblättern 16 bis 18 sind über Datenleitungen 21 mit dem Datenübertrager 4 und über den Schleifring 7 wiederum mit der zentralen Steuerung 20 verbunden. Vorzugsweise ist die zentrale Steuereinrichtung 20 in dem Turm 15 bzw. der Gondel 23 angeordnet. Denkbar ist es allerdings auch, dass die zentrale Steuerung in dem rotierenden Teil der Windkraftanlage 10 angeordnet ist.

Insgesamt wird durch die Erfindung eine höhere Verfügbarkeit von Windkraftanlagen 10 ermöglicht. Insbesondere die Zurverfügungstellung von mehreren redundanten Datenverbindungen 8, 9 etc. verhindert es zuverlässig, dass die Übertragung der Signale von der zentralen Steuerung in die Nabe über den sogenannten Timeout-Zeitraum hinaus nicht mehr funktioniert. Dadurch wird vermieden, dass die Anlage automatisch in einen Not-Halt fährt, bei dem sich die Rotorblätter selbsttätig so schnell wie möglich aus dem Wind in die Fahnenposition drehen, um den Betrieb der Anlage zu stoppen. Das kann aber bei starkem Wind zu einer extremen Belastung der Anlage 10 führen, da der ganze Turm zurückschwingt, wenn die Windlast herausgenommen wird. Solche hohen Belastungen werden durch das erfindungsgemäße Datenübertragungssystem weitestgehend vermieden, da die Datenübertragung robuster und zuverlässiger auch mit hohen Signalübertragungsgeschwindigkeiten funktioniert.

### Bezugszeichenliste

- Datenübertragungssystem: 1
- erste Datenkontakteinrichtung: 2
- zweite Datenkontakteinrichtung: 3
- Datenübertrager: 4
- erstes DSL-Modem: 5, 5a
- zweites DSL-Modem: 6, 6a
- Schleifring: 7
- Datenverbindung: 8
- Datenverbindung: 9
- Windkraftanlage: 10
- Schleifkontakt: 11
- Schleifkontakt: 12
- Schleifkontakt: 13
- Schleifkontakt: 14
- Tragkonstruktion: 15
- Rotorblatt: 16
- Rotorblatt: 17
- Rotorblatt: 18
- Sensor: 19
- Steuereinrichtung: 20
- Datenleitung: 21
- Aktor: 22
- Gondel: 23
- Nabe: 24
- Rotor: 25

## Patentansprüche

1. Windkraftanlage (10) mit einer Gondel (23) und einem Rotor (25) und mit einem Datenübertragungssystem (1) zur Datenübertragung von einer ersten Datenkontakteinrichtung (2) in der Gondel (23) über wenigstens einen Datenübertrager (4) zu einer relativ zu der ersten Datenkontakteinrichtung (2) rotierbaren zweiten Datenkontakteinrichtung (3) in dem Rotor (25), **dadurch gekennzeichnet,**
**dass** die erste Datenkontakteinrichtung (2) mit einem ersten DSL-Modem (5) verbunden ist, welches über den wenigstens einen Datenübertrager (4) mit einem zweiten DSL-Modem (6) verbunden ist, wobei das zweite DSL-Modem (6) mit der zweiten Datenkontakteinrichtung (3) verbunden ist und wobei zwischen der ersten und der zweiten Datenkontakteinrichtung (2, 3) der Datenübertrager (4) vorgesehen ist.

2. Windkraftanlage (10) nach Anspruch 1, wobei der Datenübertrager (4) wenigstens einen Schleifring (7) mit wenigstens einem Schleifkontakt (11, 12, 13, 14) umfasst.

3. Windkraftanlage (10) nach einem der vorhergehenden Ansprüche, wobei der Schleifring (7) wenigstens zwei Schleifkontakte (11, 12, 13, 14) umfasst.

4. Windkraftanlage (10) nach dem vorhergehenden Anspruch, wobei wenigstens vier Schleifkontakte (11, 12, 13, 14) vorgesehen sind.

5. Windkraftanlage (10) nach einem der vorhergehenden Ansprüche, wobei wenigstens zwei redundante Datenverbindungen (8, 9) vorgesehen sind.

6. Windkraftanlage (10) nach einem der vorhergehenden Ansprüche, wobei jeweils wenigstens zwei Schleifkontakte (11, 13; 12, 14) parallel geschaltet sind.

7. Windkraftanlage (10) nach einem der vorhergehenden Ansprüche, wobei wenigstens eines des ersten und/oder zweiten DSL-Modems (5, 6) als ADSL-Modem ausgeführt ist.

8. Windkraftanlage (10) nach einem der vorhergehenden Ansprüche, wobei wenigstens eines des ersten und/oder zweiten DSL-Modems (5, 6) als SDSL-Modem und insbesondere als SHDSL-Modem ausgeführt ist.

9. Windkraftanlage (10) nach dem vorhergehenden Anspruch, wobei die Datenübertragung in einem Frequenzbereich unterhalb 10 MHz und insbesondere unterhalb 2 MHz erfolgt.

10. Windkraftanlage (10) nach dem vorhergehenden Anspruch, wobei die Datenübertragung in einem Frequenzbereich von 50 kHz bis 1500 kHz erfolgt.

11. Windkraftanlage (10) nach einem der vorhergehenden Ansprüche, mit wenigstens einer Tragkonstruktion (15) und wenigstens einem drehbar daran vorgesehenen Rotorblatt (16, 17) und wenigstens einem Sensor (18) an dem Rotorblatt (16, 17), wobei eine Steuereinrichtung (19) an der Tragkonstruktion (15) vorgesehen ist, welche über die wenigstens eine Datenverbindung (8, 9) mit dem wenigstens einen Sensor (18) in dem Rotorblatt (16, 17) in Datenverbindung steht.

## Claims

1. Wind turbine (10) having a nacelle (23) and a rotor (25) and a data transmission system (1) which is suitable and equipped for transmitting data from a first data contact device (2) in the nacelle (23) through at least one data transmitter (4) to a second data contact device (3) in the rotor (25) which is rotatable relative to the first data contact device (2), **characterized in that** the first data contact device (2) is connected with a first DSL modem (5) which is connected with a second DSL modem (6) through the at least one data transmitter (4), wherein the second DSL modem (6) is connected with the second data contact device (3) and wherein the data transmitter (4) is provided between the first and second data contact devices (2, 3).

2. The wind turbine (10) according to claim 1 wherein the data transmitter (4) comprises at least one slip ring (7) having at least one sliding contact (11, 12, 13, 14).

3. The wind turbine (10) according to any of the preceding claims wherein the slip ring (7) comprises at least two sliding contacts (11, 12, 13, 14).

4. The wind turbine (10) according to the preceding claim wherein at least four sliding contacts (11, 12, 13, 14) are provided.

5. The wind turbine (10) according to any of the preceding claims wherein at least two redundant data connections (8, 9) are provided.

6. The wind turbine (10) according to any of the preceding claims wherein at least two sliding contacts (11, 13; 12, 14) each are connected in parallel.

7. The wind turbine (10) according to any of the preceding claims wherein at least one of the first and/or second DSL modems (5, 6) is configured as an ADSL modem.

8. The wind turbine (10) according to any of the preceding claims wherein at least one of the first and/or second DSL modems (5, 6) is configured as an SDSL modem and in particular an SHDSL modem.

9. The wind turbine (10) according to the preceding claim wherein data is transmitted in a frequency range below 10 MHz and in particular below 2 MHz.

10. The wind turbine (10) according to the preceding claim wherein data is transmitted in a frequency range of 50 kHz to 1500 kHz.

11. The wind turbine (10) according to any of the preceding claims having at least one supporting structure (15) and at least one rotor blade (16, 17) provided rotatable thereat and at least one sensor (18) at the rotor blade (16, 17), wherein the supporting structure (15) is provided with a control device (19) which via the at least one data connection (8, 9) is in data connection with the at least one sensor (18) in the rotor blade (16, 17).

## Revendications

1. Éolienne (10) munie d'une nacelle (23), d'un rotor (25) et d'un système de transmission de données (1), destinée à transmettre des données à partir de premiers moyens de mise en contact de données (2) dans la nacelle (23) par le biais d'au moins un transmetteur de données (4) à destination de deuxièmes moyens de mise en contact de données (3) dans le rotor (25), pouvant être mis en rotation par rapport aux premiers moyens de mise en contact de données (2),
**caractérisée en ce**
**que** les premiers moyens de mise en contact de données (2) sont connectés à un premier modem DSL (5), lequel est connecté à un deuxième modem DSL (6) par le biais dudit au moins un transmetteur de données (4), le deuxième modem DSL (6) étant connecté aux deuxièmes moyens de mise en contact de données (3) et le transmetteur de données (4) étant prévu entre les premiers et les deuxièmes moyens de mise en contact de données (2, 3).

2. Éolienne (10) selon la revendication 1, le transmetteur de données (4) comprenant au moins une bague collectrice (7) pourvue d'au moins un contact glissant (11, 12, 13, 14).

3. Éolienne (10) selon l'une quelconque des revendications précédentes, la bague collectrice (7) comprenant au moins deux contacts glissants (11, 12, 13, 14).

4. Éolienne (10) selon la revendication précédente, au moins quatre contacts glissants (11, 12, 13, 14) étant prévus.

5. Éolienne (10) selon l'une quelconque des revendications précédentes, au moins deux liaisons de données redondantes (8, 9) étant prévues.

6. Éolienne (10) selon l'une quelconque des revendications précédentes, au moins deux contacts glissants (11, 13; 12, 14) étant chacun montés en parallèle.

7. Éolienne (10) selon l'une quelconque des revendications précédentes, au moins un des deux modems DSL (5, 6), du premier et/ou du deuxième, étant conçu comme modem ADSL.

8. Éolienne (10) selon l'une quelconque des revendications précédentes, au moins un des deux modems DSL (5, 6), du premier et/ou du deuxième, étant conçu comme modem SDSL et notamment comme modem SHDSL.

9. Éolienne (10) selon la revendication précédente, la transmission de données s'effectuant sur une plage de fréquences inférieure à 10 MHz et notamment inférieure à 2 MHz.

10. Éolienne (10) selon la revendication précédente, la transmission de données s'effectuant sur une plage de fréquences comprise entre 50 kHz et 1500 kHz.

11. Éolienne (10) selon l'une quelconque des revendications précédentes, munie au moins d'une structure porteuse (15), d'au moins une pale de rotor (16, 17) qui y est prévue tournante, et d'au moins un capteur (18) sur la pale de rotor (16, 17), un dispositif de commande (19) étant prévu sur la structure porteuse (15), celui-ci étant en liaison de données avec ledit au moins un capteur (18) sur la pale de rotor (16, 17) par le biais de ladite au moins une liaison de données (8, 9).
